Europäisches Patentamt

European Patent Office

Office européen des brevets

(11) Numéro de publication: **0 266 241 B1**

(12) **FASCICULE DE BREVET EUROPEEN**

(45) Date de publication de fascicule du brevet:
**15.01.92**

(21) Numéro de dépôt: **87402159.5**

(22) Date de dépôt: **28.09.87**

(51) Int. Cl.⁵: **H04N 1/40**

(54) Procédé pour transformer une image initiale de type vidéo à multiples niveaux de gris en une image binaire.

(30) Priorité: **30.09.86 FR 8613577**

(43) Date de publication de la demande:
**04.05.88 Bulletin 88/18**

(45) Mention de la délivrance du brevet:
**15.01.92 Bulletin 92/03**

(84) Etats contractants désignés:
**AT BE CH DE ES FR GB GR IT LI LU NL SE**

(56) Documents cités:
**EP-A- 0 070 161**
**US-A- 4 575 768**

**PATTERN RECOGNITION, vol. 11, no. 3, 1979, pages 191-204, Pergamon Press Ltd, GB; YASUO NAKAGAWA et al.: "Some experiments on variable thresholding"**

(73) Titulaire: **BERTIN & CIE**
**Zone Industrielle Boîte postale 3**
**F-78373 Plaisir Cédex(FR)**

(72) Inventeur: **Fardeau, Michel Gustave Jules**
**20 Demeure de Monclair**
**F-13290 Les Milles(FR)**
Inventeur: **Adamolle, Bruno Jean Marie**
**37 Résidence le Pey-Blanc**
**F-13090 Aix-en-Provence(FR)**

(74) Mandataire: **Colas, Jean-Pierre et al**
**Cabinet de Boisse 37, avenue Franklin D. Roosevelt**
**F-75008 Paris(FR)**

Rank Xerox (UK) Business Services

## Description

La présente invention est relative à un procédé et un dispositif pour transformer une image initiale de type vidéo, pouvant comporter un nombre important de niveaux de gris différents, par exemple 128 ou 256, en une image binaire, les points-image les plus sombres de l'image initiale étant noirs sur l'image transformée, et les points-image les plus clairs de l'image initiale étant blancs sur l'image transformée.

Une telle transformation est nécessaire dans divers domaines, notamment lorsqu'il s'agit de collecter des informations contenues dans un graphisme de teinte plus ou moins sombre porté par un support plus ou moins clair, par exemple en vue de la télécopie, de la mémorisation sous forme électronique de documents et plans, du pré-traitement pour envoi dans un lecteur optique de caractères imprimés ou encore de messages manuscrits, ou du prétraitement en vue de la reconnaissance de formes en général.

Dans un tel procédé, pour chaque point-image, ou "pixel", de l'image initiale, on doit déterminer s'il doit correspondre à un pixel "blanc" ou "noir" de l'image transformée.

Cela peut se faire par une méthode qui implique la détermination d'un seuil pour les niveaux de gris.

Dans la conception la plus simple, le niveau du seuil est fixé à l'avance, et il est le même pour toute l'image. Cela peut fausser le message contenu dans l'image initiale aux cas où une partie fu fond, considéré comme clair, est plus foncée que le niveau du seuil, ou bien une partie du graphisme est plus pâle que le même niveau du seuil, ou vice-versa.

On peut limiter ce risque en choisissant un niveau de seuil différent pour chaque image, ce niveau de seuil étant déterminé à partir del'histogramme des niveaux de gris de l'image initiale. Habituellement, cet histogramme est bimodal, avec deux maxima distincts correspondant l'un au fond et l'autre au graphisme, et le seuil sera fixé à l'endroit du minimum séparant les deux maxima de l'histogramme. Il arrive cependant que ce minimum soit peu net ou conduise à de mauvais résultats, notamment quand le contraste est faible et le fond irrégulier.

Il est connu de perfectionner cette méthode en décomposant l'image initiale en un certain nombre d'éléments distincts, ou fenêtres, et de déterminer l'histogramme des gris, et le seuil, pour chaque fenêtre. Par exemple, selon EP-A-0070161, pour un bloc de signaux d'éléments d'image, qu'on peut assimiler à une fenêtre, on détermine le seuil correspondant de telle manière que la différence entre ce seuil et le signal maximum du bloc soit un pourcentage constant, par exemple 40%, de l'écart entre les signaux maximum et minimum de ce bloc. De préférence, on ne change la valeur du seuil, par rapport à une valeur prédéterminée, que si ledit écart entre signaux maximum et minimum dépasse une valeur d'écart prédéterminée.

On peut admettre, comme on le verra plus loin, qu'un faible écart entre signaux maximum et minimum correspond à un histogramme monomodal. Le procédé décrit aboutit donc à un seuil constant dans toutes les positions de l'image où l'histogramme est monomodal, ce qui peut conduire à des informations erronées, en particulier dans le cas où le fond présente une variation progressive de niveau. Des anomalies peuvent en outre apparaître au passage d'une fenêtre à une autre.

Une autre méthode ne fait pas appel à la notion de seuil d'intensité de gris, mais à la notion de "contour", séparant le fond du graphisme, voir Cahier des Charges du Centre National d'Etudes des Télécommunications (CNET) document TDT 6 du 28 juin 1984, page 3.

Le contour est déterminé en associant à l'image initiale une carte des dérivées spatiales de l'intensité de gris. Le contour est défini pour l'ensemble des pixels où cette dérivée est supérieure à une valeur minimale. Il suffit ensuite d'une comparaison simple pour savoir si l'intérieur d'un contour fermé doit être blanc ou noir.

Cette méthode est bien adaptée aux images à contraste variable, mais elle oblige à des calculs nombreux et complexes.

Il existe donc un besoin d'une méthode qui permette la transformation d'images à multiples niveaux de gris en image binaire, avec une bonne fiabilité même si le contraste est médiocre, tout en ne nécessitant pas des calculs aussi complexes que la méthode indiquée ci-dessus.

L'invention fournit dans ce but un procédé pour transformer une image initiale de type vidéo à multiples niveaux de gris en une image binaire, dans lequel on décompose l'image initiale en un certain nombre d'images partielles, on détermine pour chaque image partielle un seuil de niveau de gris et on affecte au pixel central de l'image partielle une valeur correspondant au noir ou au blanc de l'image transformée selon qu'il a un niveau de gris supérieur ou inférieur audit seuil. Selon l'invention, ce procédé a pour particularité qu'on associe à chaque pixel de l'image initiale une image partielle centrée sur ledit pixel et comprenant plusieurs pixels dans au moins une dimension; et, si l'histogramme des niveaux de gris de cette image partielle est considéré comme bimodal, on choisit un seuil médian par rapport à cet histogramme, si l'histogramme est considéré comme monomodal, on choisit un seuil extérieur à cet histogramme, la position de ce seuil par rapport à l'histogramme étant déterminée par comparaison de cet histogramme avec une valeur de fond moyen fixée à l'avance.

Suivantune modalité qui apporte une simplification importante pour décider si l'histogramme doit être considéré comme bimodal ou monomodal, on détermine l'écart entre les niveaux de gris le plus haut et le plus bas de l'image partielle, et on le compare à une valeur d'écart choisie à l'avance. Ainsi, il suffit de déterminer la différence entre les chiffres désignant les niveaux de gris le plus haut et le plus bas et de comparer cette différence à une valeur fixée à l'avance.

Avantageusement, si l'histogramme est considéré comme bimodal, on détermine le seuil en soustrayant une valeur constante au niveau de gris le plus élevé, cette valeur étant inférieure à ladite valeur d'écart, ou bien on ajoute cette valeur constante au niveau de gris le plus bas. La détermination du seuil est ainsi simplifiée elle aussi.

On peut encore simplifier le procédé en prévoyant que l'image partielle est une étoile à $\overline{n}$ branches, centrée sur le pixel considéré et dont les branches ont la largeur d'un pixel, et même, dans le cas où la partie intéressante de l'image est formée de lignes parallèles, par exemple un codebarres, ou peut prévoir que l'image partielle est une ligne perpendiculaire aux lignes du graphisme formée d'une série de pixels consécutifs, centrée sur le pixel considéré, ce qui correspond à une étoile qui n'aurait plus que deux branches opposées.

De préférence, les dimensions de l'image partielle, ou la plus grande dimension de celle-ci, sont à peu près égales à la période spatiale la plus grande du graphisme qui porte l'information qu'on veut transmettre ou conserver.

Avantageusement, la valeur de fond moyen est obtenue à partir de l'ensemble de l'image initiale ou à partir d'une partie de cette image initiale qui est notablement plus grande que l'image partielle et qui inclut celle-ci. Par exemple, si les dimensions de l'image partielle sont de 1 mm environ, celles de la partie d'image seront de l'ordre du centimètre.

De préférence, si l'image initiale est du type "inscriptions foncées sur fond clair", on prend comme fond moyen la moyenne des gris les plus clairs des images partielles de l'image initiale ou de la partie considérée de cette image, et inversement dans le cas d'une image du type "inscriptions claires sur fond sombre".

L'invention va maintenant être exposée plus en détail à l'aide d'un exemple pratique, non limitatif, illustré avec les dessins parmi lesquels :

Figure 1 est un diagramme de clarté le long d'une ligne d'une image initiale.

Figure 2 est un organigramme montrant les étapes du procédé.

Figures 3, 4, 5 sont de schémas illustrant les trois modes de détermination du seuil.

Figure 6 est un schéma d'un dispositif câblé pour la mise en oeuvre de l'invention.

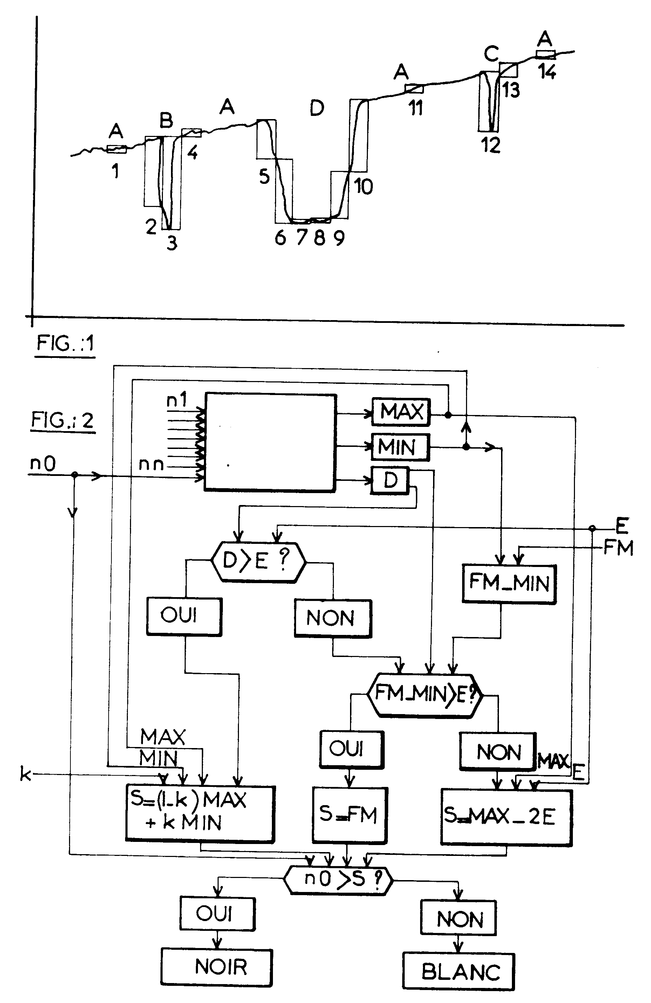

La figure 1 est un diagramme de l'intensité lumineuse le long d'une ligne traversant une fraction d'une image initiale représentant un support clair sur lequel ont été portée des indications sombres. La courbe en traits pleins montre les variations de cette intensité lumineuxe, le fond clair correspondant aux parties hautes de la courbe, et les inscriptions aux dépressions. La courbe montre des parties A à faibles fluctuations, mais avec une dérive d'ensemble, qui correspondent au fond. Les fluctuations constituent un bruit de fond dû aux irrégularités du support ou des moyens de détection. La courbe montre encore des dépressions étroites B, C et une dépression large D. Ces dépressions correspondent à la traversée de parties du graphisme. De petits rectangles 1, 2 matérialisent, pour des sections différentes de la courbe, qui peuvent correspondre à des images partielles ou "pavés", le maximum et le minimum de chaque section.

Il est facile de constater que la hauteur des rectangles 1, 4, 11 et 14, qui sont situés sur les parties A, est très faible, et résulte essentiellement du bruit de fond. Cela correspond à un histogramme monomodal. La hauteur des rectangles 2, 3 et 12, qui correspondent aux dépressions étroites B et C est au contraire très grande. Il en est de même pour les rectangles 5, 6, 9, 10 placés sur les deux bords de la dépression large D. En revanche, les rectangles 7 et 8 situés dans le fond de cette dépression sont eux aussi de faible hauteur.

L'observation de cette figure montre d'abord que la technique usuelle fondée sur l'emploi d'un seuil unique pour toute l'image ou pour une fenêtre ne permettra pas de saisir la petite dépression C, en raison de la dérive générale du fond, à moins de choisir une fenêtre de dimension nettement plus petite que la longueur de la figure 1. Au contraire, le procédé de l'invention permet de saisir à coup sûr cette dépression.

Dans le cas de la dépression large D, la seule considération de la monomodalité ou bimodalité de l'histogramme ne permettrait de distinguer que les contours de la dépression. Pour distinguer les rectangles 7 et 8 du fond de la dépression, de ceux des parties A, il est fait appel à la notion de "fond moyen", celui-ci étant déterminé à partir de l'ensemble de l'image initiale ou d'une partie de celle-ci. Dans le cas général, où l'on doit traiter des inscriptions sombres sur fond clair, les parties A, qui sont les plus nombreuses, ont l'intensité lumineuse maximale. On prendra, de préférence, comme "fond moyen", la moyenne des maxima des rectangles de l'image initiale ou de la fraction d'image initiale considérée. Cela élimine du calcul les petites dépressions et les bords des dépressions larges.

On opérera de façon symétrique dans le cas d'un fond sombre.

L'organigramme de la figure 2 montre le déroulement des étapes du procédé.

On met au préalable en mémoire les données nécessaires : E, FM, K, dont le sens et l'utilisation seront précisés dans la suite.

On traite ensuite le niveau de gris $n_0$ du pixel considéré, les niveaux de gris $n_1 n_2$ ... n.n des autres pixels de l'image partielle qui englobe le pixel considéré. On en extrait les niveaux maximal et minimal, MAX et MIN ainsi que D = MAX-MIN. On compare ensuite D et E. Si D est supérieur à E, on peut considérer que l'on a un histogramme bimodal. La valeur du seuil S est déterminée par

S = (1 - k) MAX + k MIN,

k étant un coefficient qui est compris normalement entre 0,3 et 0,7. Notamment, si k = 0,5

$$S = \tfrac{1}{2} (MAX + MIN).$$

Si D est inférieur à E, on a un histogramme monomodal. Il faut donc savoir si on est dans le cas d'une zone A ou d'une zone D de la figure 1.

Pour cela, on compare MIN au fond moyen FM préalablement mis en mémoire, et pour cela on calcule FM-MIN.

Si FM-MIN est inférieur à E, on se trouve sur le fond (zone A). On doit noter que c'est par simplicité que l'on compare FM-MIN à E, on pourrait choisir une valeur E′ différente de la valeur E utilisée par ailleurs.

Pour une zone A, on détermine S par :

S = MAX - 2E.

Le choix du nombre 2 est, lui aussi, arbitraire.

Si FM-MIN est supérieur à E, on se trouve dans une dépression large (zone D).

On prend alors :

S = FM.

Il suffit ensuite de comparer $n_0$ et S pour définir si le pixel considéré viendra en noir ou blanc dans l'image transformée.

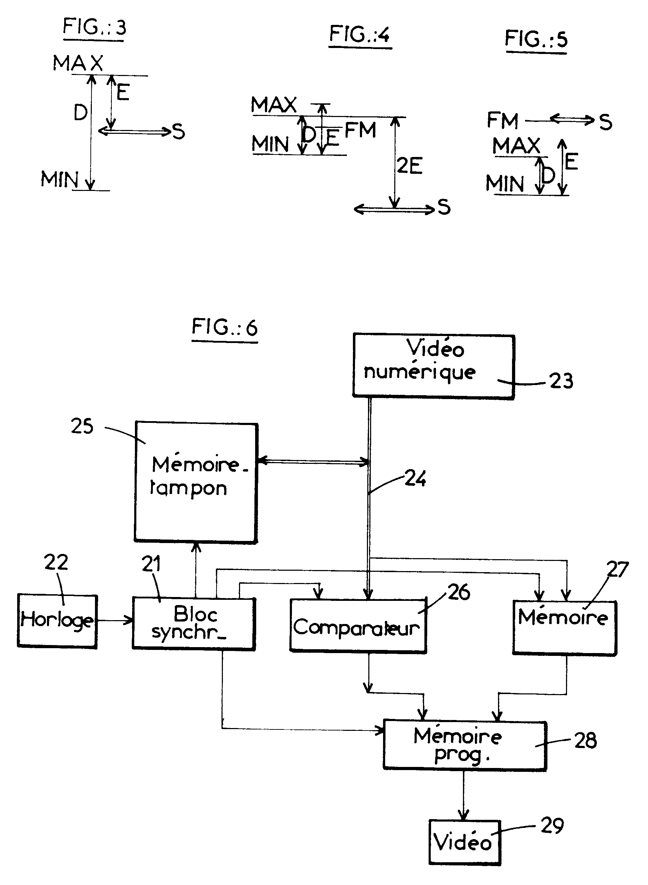

Les figures 3, 4, 5 montrent les trois modes de détermination de S.

L'invention peut être mise en oeuvre à l'aide d'un logiciel , ou à l'aide d'un appareillage matériel.

Dans le cas d'une réalisation matérielle câblée, on peut apporter des simplifications en fonction des caractéristiques connues, telles que contraste, fréquence spéciale des graphismes, etc..., des documents à binariser.

A titre d'illustration, la figure 6 donne le schéma d'un exemple de réalisation simplifiée.

Un bloc de synchronisation 21 génère les signaux nécessaires et les transmet aux autres organes de l'appareil.Le bloc de synchronisation 21 est alimenté par une horloge 22. Une vidéo numérique 23, à n bits ( n = 6 par exemple) est reliée par l'intermédiaire d'un bus 24, d'une part à une mémoire-tampon 25 d'une zone d'image courant comportant un nombre suffisant de lignes vidéo, et d'autre part à un comparateur 26, qui conserve la valeur maximale entre deux valeurs présentées successivement. La vidéo 23 est encore reliée à une mémoire 27, de 1 octet, correspondant à un pixel.

L'appareil comporte encore une mémoire programmable 28, dont les signaux alimentent une vidéo binaire 29, et qui reçoit des signaux d'une part de la mémoire 27, d'autre part du bloc de synchronisation 21, et encore du comparateur 26. Le fonctionnement de cet appareillage sera aisément compris de l'homme de l'art.

Les différents pixels fournis par la vidéo numérique 23 sont dirigés vers la mémoire-tampon 25 par l'intermédiaire du bus 24. C'est le bloc de synchronisation 21 qui fournit, au fur et à mesure, les adresses de rangement des différents pixels de vidéo.

Entre deux cycles de rangement des pixels vidéo, le bloc de synchronisation 21 élabore les adresses des n pixels de l'image partielle et du pixel central de cette image, pour assurer leur transfert, via le bus 24 d'une part vers le comparateur 26, et d'autre part, vers la mémoire 27.

Le comparateur 26 compare les pixels qui lui sont proposés séquentiellement, et ceci deux à deux, afin de déterminer le maximum.

Le bloc de synchronisation 21 pilote ensuite la mémoire programmable 28, qui définit un seuil en fonction de la valeur maximum issue du comparateur 26 et de la valeur du pixel courant issu de la mémoire 27, pour décider si le pixel mémorisé en 27 doit être considéré comme noir ou comme blanc et générer ainsi un signal à transmettre à la vidéo binaire 29.

L'homme de métier comprendra aisément que le schéma proposé peut être complété par un circuit de calcul de MIN et un circuit de calcul de FM. Dans ce cas, la mémoire programmable 28 est remplacée par une cascade de mémoires programmables, permettant d'avoir ainsi le nombre de bits d'entrée compatibles avec l'ensemble des circuits qui lui sont connectés.

**Revendications**

1. Procédé pour transformer une image initiale de type vidéo à multiples niveaux de gris en une image binaire, dans lequel on décompose l'image initiale en un certain nombre d'images partielles , on détermine pour chaque image partielle un seuil de niveau de gris et on affecte au pixel central de l'image partielle une valeur correspondant au noir ou au blanc de l'image transformée selon qu'il a un niveau de gris supérieur ou inférieur audit seuil,

caractérisé en ce qu'on associe à chaque pixel de l'image initiale une image partielle centrée sur ledit pixel et comprenant plusieurs pixels dans au moins une dimension; et, si l'histogramme des niveaux de gris de cette image partielle est considéré comme bimodal (D > E), on choisit un seuil (S) médian par rapport à cet histogramme, si l'histogramme est considéré comme monomodal, on choisit un seuil (S) extérieur à cet histogramme, la position de ce seuil par rapport à l'histogramme étant déterminée par comparaison de cet histogramme avec une valeur de fond moyen (FM) fixée à l'avance.

2. Procédé selon la revendication 1, caractérisé en ce que, pour décider si l'histogramme doit être considéré comme bimodal ou monomodal, on détermine l'écart entre les niveaux de gris le plus haut et le plus bas de l'image partielle, et on le compare à une valeur d'écart choisie à l'avance.

3. Procédé selon la revendication 2, caractérisé en ce que si l'histogramme est considéré comme bimodal, on détermine le seuil en soustrayant une valeur constante du niveau de gris le plus élevé, cette valeur étant inférieure à ladite valeur d'écart, ou bien on ajoute cette valeur constante au niveau de gris le plus bas.

4. Procédé selon l'une des revendications 1 à 3, caractérisé en ce que l'image partielle est une étoile à n branches, centrée sur le pixel considéré et dont les branches ont la largeur d'un pixel.

5. Procédé selon l'une des revendications 1 à 3, adapté au traitement d'images où l'on s'intéresse seulement à un graphisme formé de lignes parallèles, caractérisé en ce que l'image partielle est une ligne perpendiculaire aux lignes du graphisme, formée d'une série de pixels consécutifs, centrée sur le pixel considéré.

6. Procédé selon l'un des revendications 1 à 5, caractérisé en ce que la plus grande dimension de l'image partielle est à peu près égale à la période spatiale du graphisme portant l'information qu'on veut transmettre ou conserver.

7. Procédé selon l'une des revendications 1 à 6, caractérisé en ce que la valeur de fond moyen est obtenue à partir de l'ensemble de l'image initiale ou à partir d'une partie de cette image initiale qui est notablement plus grande que l'image partielle et qui inclut celle-ci.

8. Procédé selon la revendication 7, caractérisé en ce que, si l'image initiale est du type "inscriptions foncées sur fond clair", on prend comme fond moyen la moyenne des gris les plus clairs des images partielles de l'image initiale ou de la partie considérée de cette image, etinversement dans le cas d'une image du type "inscriptions claires sur fond sombre".

**Claims**

1. Process for transforming an initial video-type image with multiple gray levels into & binary image, in which the initial image is decomposed into a certain number of partial images, a grey level threshold is determined for each partial image, and the central pixel of the partial image is assigned a value corresponding to the black or to the white of the transformed image, depending on whether the pixel has a gray level greater or less than the said threshold

characterised in that there is associated with each pixel of the initial image a partial image centred on the said pixel and comprising a plurality of pixels in at least one dimension: and, if the histogram of the grey levels of this partial image is considered as bimodal (D > E), a median threshold (S) is selected with respect to this histogram, if the histogram is considered as monomodal, a threshold (S) outside this histogram is selected, the position of this threshold with respect to the histogram being determined by comparison of this histogram with a preset mean background value (FM).

2. Process according to Claim 1, characterised in that, in order to decide whether the histogram is to be considered as bimodal or monomodal, a determination is made of the difference between the highest and the lowest grey levels of the partial image, and this difference is compared with a preset difference value.

3. Process according to Claim 2, characterised in that, if the histogram is considered as bimodal, the threshold is determined by subtracting a constant value from the highest grey level, this value being less than the said difference value, or alternatively, this constant value is added to the lowest grey level.

4. Process according to any of Claims l to 3, characterized in that the partial image is a star with n branches which is centred on the pixel considered and the branches of which have the width of a pixel.

5. Process according to any of Claims l to 3, adapted for the processing of images where the only relevant matter concerns graphics formed of parallel lines, characterized in that the partial image is a line which is perpendicular to the lines of the graphics and which is formed of a series of consecutive pixels which is centred on the pixel considered.

6. Process according to any of Claims l to 5, characterized in that the greatest dimension of the partial image is approximately equal to the spatial period of the graphics bearing the information which it is desired to transmit or to preserve.

7. Process according to any of Claims l to 6, characterized in that the mean background value is obtained from the entire initial image or from a part of this initial image which is significantly larger than the partial image and which includes the latter.

8. Process according to Claim 7, characterized in that, if the initial image is of the "dark inscriptions on a light background" type, the mean of the lightest greys of the partial images of the initial image or of the considered part of this image is adopted as mean background, and conversely in the case of an image of the "light inscriptions on a dark background" type.

**Patentansprüche**

1. Verfahren zum Umwandeln eines originalen Videobildes mit vielen Graupegeln in ein binäres Bild, bei dem das originale Bild in eine bestimmte Anzahl von Teilbildern zerlegt wird, für jedes Teilbild eine Graupegelschwelle bestimmt wird und für das zentrale Pixel des Teilbildes ein Wert entsprechend dem Schwarz oder Weiß des umgewandelten Bildes vorgesehen wird, je nach dem, ob es einen Graupegel besitzt, der größer oder kleiner als die Schwelle ist, dadurch gekennzeichnet, daß jedem Pixel des ursprünglichen Bildes ein Teilbild zugeordnet wird, das auf das Pixel zentriert ist und mehrere Pixel in zumindest einer Dimension enthält, und daß, falls das Histogramm der Graupegel dieses Teilbildes als bimodal anzusehen ist (D > E), eine mittlere Schwelle (S) bezüglich dieses Histrogramms gewählt wird, und daß, falls das Histogramm als monomodal anzusehen ist, eine außerhalb des Histrogramms liegende Schwelle (S) gewählt wird, wobei die Lage der Schwelle bezüglich des Histogramms durch einen Vergleich des Histogramms mit einem vorher festgelegten mittleren Untergrundwert (FM) bestimmt wird.

2. Verfahren nach Anspruch 1, dadurch gekennzeichnet, daß zur Bestimmung, ob das Histogramm als bimodal oder monomodal anzusehen ist, der Anstand zwischen dem obersten Graupegel und dem untersten Graupegel des Teilbildes bestimmt wird und daß er mit einem vorher gewählten Anstandswert verglichen wird.

3. Verfahren nach Anspruch 2, dadurch gekennzeichnet, daß wenn das Histogramm als bimodal anzusehen ist, die Schwelle dadurch bestimmt wird, daß von dem höchsten Graupegel ein konstanter Wert abgezogen wird, wobei dieser Wert kleiner als der besagte Abstandswert ist, oder daß dieser konstante Wert zu dem niedrigsten Graupegel addiert wird.

4. Verfahren nach einem der Ansprüche 1 bis 3, dadurch gekennzeichnet, daß das Teilbild ein Stern mit n-Zacken ist, der auf das betrachtete Pixel zentriert ist und dessen Zacken die Breite eines Pixels haben.

5. Verfahren nach einem der Ansprüche 1 bis 3, zur Verarbeitung von Bildern, bei dem man sich allein für den aus parallelen Linien gebildeten Graphismus interessiert, dadurch gekennzeichnet, daß das Teilbild eine senkrecht zu den Linien des Graphismus verlaufende Linie ist, die aus einer Reihe aufeinanderfolgender Pixel besteht und auf das betrachtete Pixel zentriert ist.

6. Verfahren nach einem der Ansprüche 1 bis 5, dadurch gekennzeichnet, daß die größte Abmessung des Teilbildes praktisch gleich der räumlichen Periode des Graphismus ist, der die zu übertragende oder zu speichernde Information trägt.

7. Verfahren nach einem der Ansprüche 1 bis 6, dadurch gekennzeichnet, daß der mittlere Untergrundwert aus der Gesamtheit des originalen Bildes oder aus einem Teil des originalen Bildes, der wesentlich größer als das Teilbild ist und dieses enthält, erhalten wird.

8. Verfahren nach Anspruch 7, dadurch gekennzeichnet, daß, wenn das originale Bild vom Typ "dunkle Schrift auf hellem Untergrund" ist, als mittlerer Untergrund das Mittel der hellsten Grautöne der Teilbilder des originalen Bildes oder des betrachteten Teils dieses Bildes genommen wird, und umgekehrt im Fall eines Bildes vom Typ "helle Schrift auf dunklem Untergrund".

FIG.:1

FIG.: 2

FIG.:3

MAX

D $\updownarrow$ E

$\longleftrightarrow$ S

MIN

FIG.:4

MAX

D $\updownarrow$ E FM

MIN

2E

$\longleftrightarrow$ S

FIG.:5

FM $\longleftrightarrow$ S

MAX

D $\updownarrow$ E

MIN

FIG.:6

Vidéo numérique — 23

25 — Mémoire - tampon

24

22 — Horloge

21 — Bloc synchr_

Comparateur — 26

Mémoire — 27

Mémoire prog. — 28

Vidéo — 29